# EUROPEAN PATENT SPECIFICATION

(11) **EP 1 452 225 B1**
(45) Date of publication and mention of the grant of the patent: **10.09.2008**
(21) Application number: 03251164.4
(22) Date of filing: 26.02.2003
(51) Int. Cl.: B01J 13/00

(54) **Preparation of nanoparticles**
Herstellung von Nanopartikeln
Préparation de nanoparticles

(43) Date of publication of application: 01.09.2004
(73) Proprietor: National Institute of Advanced Industrial Science and Technology, Tokyo 100-8921 (JP)
(72) Inventor: Nakamura, Hiroyuki Nat. Inst. Adv. Ind. Sci.& Tech, Tosu-shi Saga, 841-0052 (JP); Miyazaki, Masaya Nat. Inst. Adv. Ind. Sci. & Tech., Tosu-shi, Saga, 841-0052 (JP); Maeda, Hideaki Nat. Inst. Adv. Ind. Sci. & Tech., Tosu-shi Saga 841-0052 (JP)
(74) Representative: Driver, Virginia Rozanne

(56) References cited:
- WO-A-03/006161
- DE-A- 10 007 816
- US-B1- 6 265 025
- PATENT ABSTRACTS OF JAPAN vol. 2000, no. 22, 9 March 2001 (2001-03-09) & JP 2001 145486 A (NATL INST OF ADVANCED INDUSTRIAL SCIENCE & TECHNOLOGY METI), 29 May 2001 (2001-05-29)

## Description

This disclosure teaches techniques related to continuously preparing product particles with particle size in the order of a nanometer from a solution containing a particle-forming precursor.

Nanoparticles are used in many applications, including, as stable monochromatic fluorescence particles, magnetic particles, etc. Current research also includes efforts aimed at utilizing nanoparticles as building blocks of a wavelength-tunable light-emitting diode, monoparticle semiconductor, super-concentration magnetic storage medium and such other devices. Because of remarkable technical advances in various related fields in recent times, nanoparticles are being used in an increasingly wide range of application. Therefore, the demand for nanoparticles have increased rapidly.

Production of nanoparticles of metal such as gold, platinum and nickel, and compound such as titanium oxide, zinc oxide, cadmium selenide and zinc sulfide have been reported. Various techniques of preparing nanoparticles, such as a homogeneous precipitation method, a hydrothermal crystallization method and an organometallic synthesis method are conventionally known.

US 6 265 025 describes a method for the rapid production of homogenous, ultrafine inorganic material employing electrohydrodynamic flows in the vicinity of an electrified injector tube.

In order to obtain a desirable reduced size of the nanoparticle using a production process, in many cases, a number of nuclei are required to be formed. This also means that the concentration of a precursor, during the nucleus formation, needs to be sharply increased. This process inevitably leads to heterogeneity in the precursor concentration and increased temperature in a reaction system. This heterogeneity has a great affection on the particle size distribution of nanoparticles to be obtained. This adverse affect will be significant as the production facility is scaled up.

On the other hand, it is difficult to prepare nanoparticles on a mass production basis. To overcome this problem, a continuous preparation method has been conventionally attempted. However, these attempts have not succeeded in providing an effective technique.

Heretofore, to obtain nanoparticles with a desired particle size range the following technique has been used. Adequate raw materials are selected along with associated surfactants and other additions. A reaction temperature and reaction time is adjusted to control the rate of reaction of the raw materials or intermediate products and the rate of formation of the end product.

However, even if the reaction could be actually completed in a short period of time, the reaction rate is intentionally reduced due to the difficulty of controlling the reaction temperature and reaction time with a high degree of accuracy.

The disclosed teachings are aimed at overcoming the disadvantages in the conventional preparation methods of nanoparticles, and continuously preparing nanoparticles with a narrow particle size distribution while facilitating a highly accurate control of the reaction temperature and reaction time.

The disclosed teachings provide a method of preparing nanoparticles each having a particle size of 1 nm to 1 µm, preferably in the range of 1 to 20 nm, comprising continuously supplying a solution containing a particle-forming precursor (hereinafter referred to as "particle-forming precursor solution") into a micro channel which has a diameter of 1 µm to 1 mm and is disposed in a heating zone, simultaneously heating the solution at a heating rate of 5°C/sec or more up to a reaction initiation temperature to cause a reaction in the solution, and then cooling the solution at a cooling rate of 5°C/sec or more.
Fig. 1 is a schematic diagram showing one example of an apparatus suitable for implementing a method of the present invention;
Fig. 2 is a schematic diagram showing another example of an apparatus suitable for implementing a method of the present invention;
Fig. 3 is a transmission electron microscopic picture of gold colloid nanoparticles obtained in Example 1; and
Fig. 4 is a transmission electron microscopic picture of gold colloid nanoparticles obtained in Example 2.

With reference to the drawings, the disclosed techniques are described in detail.

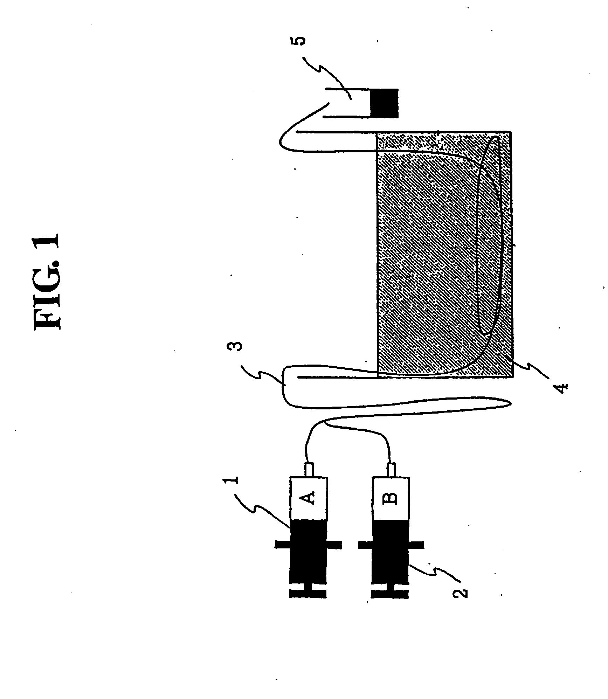

Fig. 1 schematically shows an example of an apparatus for carrying out the disclosed techniques. This apparatus uses two different kinds of particle-forming precursor solutions A and B. The two kinds of particle-forming precursor solutions A and B are simultaneously supplied to a micro channel such as a capillary tube 3 by their corresponding syringe pumps 1 and 2, and mixed together in the micro channel. The resulting mixture is transferred to a heating zone such as an oil bath 4, and rapidly heated up to a reaction initiation temperature in the heating zone 4. After reaction in the heating zone in the mixture, the reacted mixture is discharged from the heating zone 4 to the atmosphere, and rapidly cooled down. Finally, the reacted mixture is collected in a vessel 5. When the mixture passes through the heating zone 5, the product is precipitated in the form of nanoparticles.

If the two particle-forming precursor solutions do not react at room temperature but react only at a high temperature, these precursor solutions may be mixed together in advance. In such a case, the mixture is then supplied to the micro channel, and heated in the heating zone to generate nanoparticles. This causes turbulence and facilitates the mixing and the subsequent reaction that results in the creation of nanoparticles.

The micro channel 3 should be designed to have a diameter in the range of 1 µm to 1 mm. The reduced diameter of the micro channel reduces the ratio of the volume to surface area of the precursor solutions (or the mixed precursor solution) passing through the micro channel. Such a reduced ratio ensures that more of the solution can sufficiently receive the heat from an outside heating source or the heating zone in the quickest possible time. The solution also can more quickly respond to the changes in temperature of the outside heating source. This results in a rapid and highly accurate temperature control of the solution. In addition, the concentration of the solution can be controlled with a high degree of accuracy by reducing the width of the micro channel to provide a reduced diffusion length.

If the diameter of the micro channel is greater than 1 mm, the effectiveness of the apparatus deteriorates. In such a case, back mixing will occur at the front end due to turbulent flows. This makes it difficult to maintain evenly, the residence time of the solutions in the heating zone, thereby making it difficult to provide a narrow size distribution of the nanoparticles that are produced. If the diameter of the micro channel is less than 1 µm, it becomes very difficult to handle the micro channel. This also increases the pressure loss in the apparatus, deteriorating the production efficiency.

The material of the capillary tube may include glass, metal, alloy or plastic such as polyolefin, polyvinyl chloride, polyamide, polyester or fluororesin.

While the example in Fig. 1 uses a capillary tube as the micro channel, alternately the micro channel may be provided by forming a layer and then cutting a groove having a width of 1 nm to 1 µm on the surface of the layer. The layer could be made of , for example, metal oxides such as silica, alumina or titania. It could also be made of a heat-resistant plastic such as fluorinated resin, on a heat-resistant substrate, for example, made of metal or alloy,

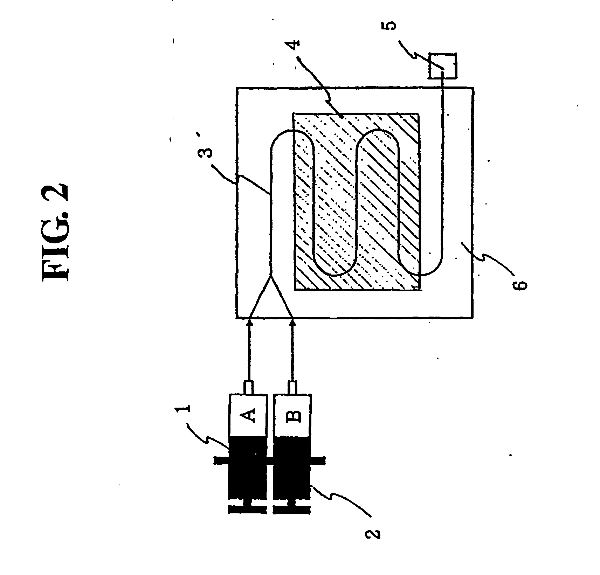

Another example having such a structure is schematically shown in Fig. 2. Specifically, a heat-resistant layer is formed on a substrate 6, and a groove 3' serving as the micro channel is cut on the substrate 6. The mixture of the particle-forming precursor solutions A and B supplied to the groove 3' is heated as it passed through the heating zone 4. The heating zone could be a heat plate. The solutions react in the heating zone and the product mixture is collected in the vessel 5.

While the examples in Figs. 1 and 2 use two separate syringe pumps as material feeders, the particle-forming precursor solutions A and B may be supplied by using a single common feeder.

A heating device for the heating zone 4 may be composed of a bath with a heating medium such as oil as described above. Any other suitable conventional heating device such as a heat plate, an infrared heater, and a high-frequency heater may also be used.

According to the disclosed technique, the particle-forming precursor solution is heated up to its reaction initiation temperature at a high heating rate of 5°C/sec or more in the heating zone. Such a rapid heating allows heat energy from outside to be transferred to the particle-forming precursor solution approximately without time lay. Thus, the reaction is formed in the solution very quickly to create a number of nuclei and consequently grow a number of particles so as to form nanoparticles having a small particle size. If the heating rate is less than 5°C/sec, the number of nuclei to be created will be reduced. This causes the particles to gradually grow around the respective nuclei at a lower speed. Thus, the particle size of the particles to be formed will be increased, and desired nanoparticles with a particle diameter 1 nm to 1 µm become harder to be obtained. Besides, in such a case, since the particle-forming precursor solution is gradually heated from its outer region toward its inner region, the reaction initiation timing and the particle growth time will be varied in the respective regions of the solution. Therefore, in such a case, the particle-size distribution cannot be controlled within a desired narrow range.

It is technically difficult to increase the heating rate in an unrestricted manner. Further, if an excessive number of nuclei are created, it will be practically impossible to supply the precursor at a concentration required for growing and forming particles corresponding to the nuclei. From this point of view, the heating rate is preferably set in a reasonable average range of 5°C/sec to 10,000°C/sec or more.

The nanoparticles formed in the heating zone in this way should be rapidly cooled immediately after the reacted solution exits the heating zone. The cooling rate is set at 5°C/sec or more. A cooling rate of less than 5°C/sec will cause increased unevenness of the cooling, the reaction termination timing and the particle growth time in the respective regions of the reacted solution, resulting in undesirably expanded particle-size distribution.

The cooling may be done by means of natural cooling, air-cooling or oil-cooling, for example. Any conventional cooling device may be used. Further, the particle-forming precursor solution may be locally heated and cooled by a small-size heating element or Peltier element disposed around the micro channel.

In the disclosed technique the reaction is not restricted to any specific mode. Any suitable mode may be selected. According to one mode, one or more reactants in the form of solution are heated or mixed together to form a powdery solid. In another mode, insoluble compound particles are precipitated from plural kinds (e.g. two kinds) of soluble compounds. In yet another mode, one kind of soluble compound is pyrolytically decomposed to form powdery compound particles. Among these modes, one that provides a higher reaction rate or having a particle precipitation-rate to be significantly influenced by the reaction temperature or the concentration of chemical species is particularly preferable.

Such a reaction may include a reaction in which a reducer is reacted with a soluble metal compound solution to precipitate various kinds of metal particles. It may also include: a reaction in which carbonic acid is reacted with a calcium hydroxide solution to precipitate calcium carbonate particles, a reaction in which a sulfuric acid solution is reacted with a calcium chloride solution to precipitate calcium sulfide particles, a reaction in which a hydrogen sulfide solution is reacted with a cadmium chloride solution to precipitate cadmium sulfide particles, a reaction in which tetraalkoxysilane is thermally decomposed to precipitate silicon oxide particles, and a reaction in which a water-soluble selenium compound solution is reacted with a water-soluble cadmium compound solution to precipitate cadmium selenide particles.

The materials forming the nanoparticles using such a reaction may include: metal such as gold, silver, palladium, cobalt or nickel; metalloids such as silicon or germanium; metal or metalloid oxide such as zinc oxide, silicon oxide or germanium oxide; metal chalcogenide compound such as cadmium selenide, cadmium sulfide or zinc sulfide; and organic compounds such as organic complex compound or organic pigment.

The solvent of the particle-forming precursor solution used in the method of the present invention may be selected from: water; water-miscible organic solvent such as methyl alcohol, ethyl alcohol, acetone, dimethylformamide, dimethylacetamide or dimethyl sulfoxide; and water-immiscible organic solvent such as octane, cyclohexane, benzene, xylene, diethyl ether or acetic ether, depending on the type of precursor and the mode of reaction to be used.

In this case, an excessively high concentration of the precursor in the particle-forming precursor solution will increase the viscosity of the solution. This leads to a heterogeneous reaction having an adverse affect on the smooth formation of nanoparticles. If the precursor concentration is excessively low, the reaction rate will be reduced, and more time will be required for forming nanoparticles. Thus, the precursor concentration is typically set in the range of 0.001 to 5 % by mass, preferably in the range of 0.01 to 1 % by mass.

In the disclosed techniques, the particle size of nanoparticles to be formed can be controlled by adjusting the heating temperature and the residence time in the heating zone. In this process, the reaction temperature may be controlled by using a heating device having a temperature control function. The residence time may be controlled by adjusting the feeding rate of the particle-forming precursor solution or the volume of the micro channel, and introducing a certain gas or liquid into the micro channel to segment the solution. In this manner, the residence-time distribution of the solution can be maintained to be uniform to provide a narrow particle-size distribution. Such a residence time-distribution depends on the flow rate distribution, which in turn arises from the friction between the solution and the inner wall of the micro channel.

In this case, the gas to be used may include: inert gas such as nitrogen, argon or helium; oxidant gas such as air or oxygen; and reductant gas such as hydrogen or ammonia. The liquid to be used may include any suitable liquid which is not homogeneously mixed with the particle-forming precursor solution. For example, when the solution is a hydrophilic solution, the liquid may be a hydrophobic solvent such as hexane, cyclohexane or toluene. When the solution is a oleophilic solution, the liquid may be a hydrophilic solvent such as water, methyl alcohol, ethyl alcohol, dimethyl sulfoxide or dimethylformamide.

In the disclosed technique, the particle-forming precursor solution may be agitated to provide homogeneous reaction and reduced reaction time in the heating zone, as needed. This agitation may be performed using a micro stirrer, a mixing tube or an ultrasound device. The solution may also be agitated by mixing magnetic particles or magnetic fluid with the particle-forming precursor solution in advance, and applying a magnetic field thereto from outside.

In the disclosed techniques, a pump is used to continuously supply the particle-forming precursor solution to the heating zone. The pump is not limited to a specific type, but any suitable small-size pump may be selected. However, it is preferable to select a pump having low pulsations, such as a syringe pump or a non-pulsating pump.

In the disclosed techniques, when two kinds of particle-forming precursor solutions are used and reacted with one another in the heating zone, these solutions are preferably selected as a combination capable of forming different phases. These solutions are then made to react with one another along the interface between the different phases in the heating zone to form nanoparticles. In this case, the reaction can be homogeneously caused to provide nanoparticles having a constant particle-size distribution. The entire flow rate and reaction time can be readily controlled by changing the respective flow rates of the phases.

According to the disclosed techniques, nanoparticles with a particle size of greater than 1 µm can also be prepared. However, particles having an excessively increased size will sediment under gravity. These sedimented particles clog the micro channel and prevent the continuous operation of the apparatus. Thus, it is desirable to select the reaction conditions such that nanoparticles having a particle size in the range of 1 nm to 1 µm, preferably in the range of 1 to 20 nm are produced.

The disclosed techniques are described in more detail in conjunction with Examples, but not limited to these Examples.

### Example 1

A micro reactor constructed as shown in Fig. 1 was prepared by immersing approximately one-half of the intermediate portion of a glass capillary tube having an inner diameter of 0.5 mm and a length of 1 m, into an oil bath having a volume of 500 ml.

A 1 mM-chloroauric acid solution and a 2 % by mass of citric acid solution were fed from first and second syringe pumps, respectively, at a feed speed of 0.05 ml/minute, and mixed together before their introduction into the oil bath. Then, the mixture was introduced into the oil bath heated at 200°C in advance, and rapidly heated up to 100°C at a heating rate of 10°C/sec to cause a reaction in the mixture. Then, the reacted mixture was naturally cooled under ambient air, and collected in a vessel. In this case, the residence time in the oil bath was 10 minutes, and the cooling rate was 10°C/sec.

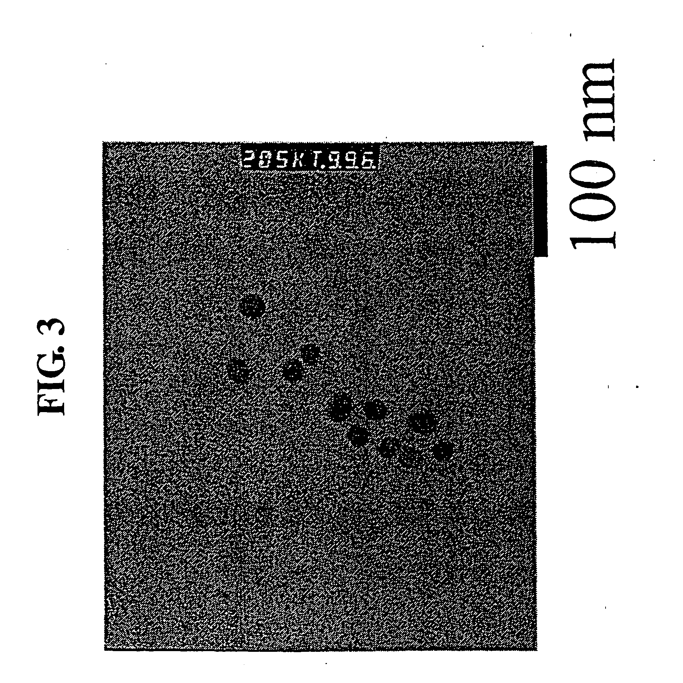

In this manner, gold colloid nanoparticles having an average particle size of 15 nm could be continuously obtained. A transmission electron microscopic picture of the obtained gold colloid nanoparticles is shown in Fig. 3.

### Example 2

Based on a micro reactor using a hot water bath as a substitute for the oil bath of the micro reactor in Example 1, chloroauric acid was deoxidized by tannic acid and citric acid.

More specifically, a 1 mM-chloroauric acid solution and a solution containing 2 % by mass of mixture consisting of tannic acid, citric acid and potassium carbonate (mass ratio: 5 : 7 : 4) were fed from the first and second syringe pumps, respectively, at a feed speed of 0.3 ml/minute, and mixed together. Then, the mixture was rapidly heated up to 60°C in the hot water bath to cause a reaction in the mixture while applying ultrasounds from outside. Then, the reacted mixture was rapidly cooled under ambient air. In this case, the heating rate was 10°C/sec, the residence time being 1 minute, and the cooling rate being 10°C/sec.

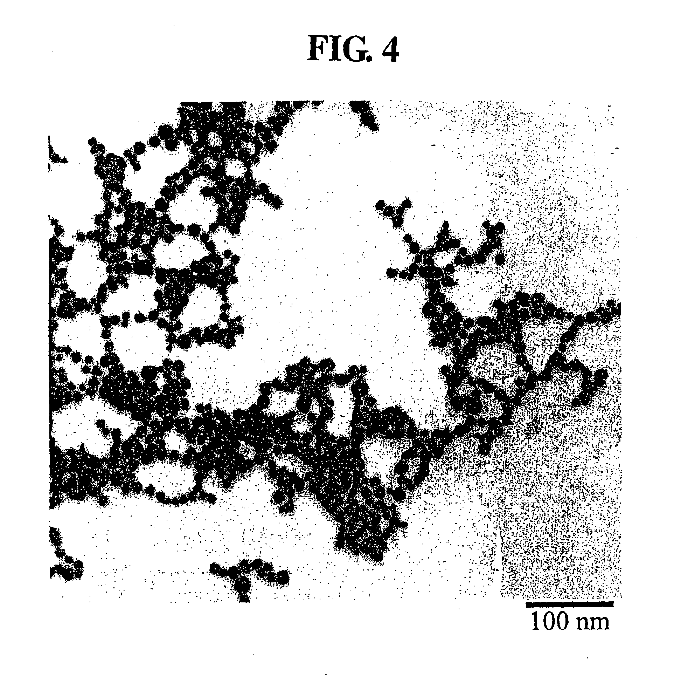

In this manner, gold colloid nanoparticles having an average particle size of 8 nm could be continuously obtained. A transmission electron microscopic picture of the obtained gold colloid nanoparticles is shown in Fig. 4.

### Example 3

This example is based on a micro reactor having the same structure as that in Example 1 except that a single syringe pump was used as a substitute for the two syringe pumps. Further, the capillary tube had an inner diameter of 1 mm and a length of 700 mm. Further, cadmium sulfide particles were prepared through a homogeneous precipitation method.

More specifically, 50 mg/liter of cadmium sulfide, 60 mg/liter of thiourea, 500 mg/liter of sodium hexametaphosphate and 30 mg/liter of sodium hydroxide were dissolved in ion-exchange water. Then, the mixture was fed from the syringe pump to the capillary tube in the oil bath heated at 97°C in advance, at a feed speed of 0.5 to 0.25 ml/minute to cause a reaction in the mixture. Then, the reacted mixture was rapidly cooled under ambient air.

In this case, both the heating rate and the cooling rate were maintained at a constant value of 5°C/sec, but only the residence time was changed between 2 minutes, 5 minutes and 10 minutes. The average particle sizes of gold colloid nanoparticles obtained in the respective conditions were judged from UV-VIS absorption spectrums. The result is shown in Table 1.

**Table 1**

| Test No. | No. 1 | No. 2 | No. 3 |
|---|---|---|---|
| Residence Time | 2 | 5 | 10 |
| Average Particle Size (nm) | 3.0 | 3.6 | 4.0 |

As seen in Table 1, the particle size of nanoparticles to be formed can be controlled by changing the residence time.

### Example 4

This example is based on a micro reactor having a structure as shown in Fig. 1, provided with a micro channel composed of a capillary tube having an inner diameter of 0.2 mm and a length of 1.2 m. A single syringe pump was used. A mixed solution containing 70 g/kg of cadmium stealate, 300 g/kg of trioctylphosphineoxide, 90 g/kg of trioctylphosphineselenide and 280 g/kg of trioctylphosphine was fed at a feed speed of 0.1 to 0.01 ml/minute. The mixture was passed through the oil bath maintained at 275°C, and rapidly heated therein to cause a reaction. Then, the reacted mixture was rapidly cooled and then collected. The average particle sizes of gold colloid nanoparticles were measured and determined from UV-VIS absorption spectrums.

In this case, the heating rate was maintained at 3000°C/sec, and the cooling rate was maintained at 1000°C/sec. The residence time was changed between 0.5 minutes. 5 minutes and 10 minutes. The result is shown in Table 2.

**Table 2**

| Test No. | No. 1 | No. 2 | No. 3 |
|---|---|---|---|
| Residence Time | 0.5 | 5.0 | 10.0 |
| Average Particle Size (nm) | 3.4 | 3.8 | 4.2 |

As seen in Table 2, the particle size of nanoparticles to be formed can be controlled by changing the residence time.

### Example 5

The residence time was maintained at 0.5 minutes, and the reaction temperature was changed from 245°C to 320°C. Other conditions of the reaction were the same as those in Example 4. The average particle sizes of obtained cadmium selenide particles were determined. The result is shown in Table 3.

**Table 3**

| Test No. | No. 1 | No. 2 | No. 3 | No. 4 |
|---|---|---|---|---|
| Reaction Temperature (°C) | 245 | 260 | 275 | 320 |
| Particle Size (nm) | 2.4 | 2.8 | 3.4 | 4.0 |

As seen in Table 2, the particle size of nanoparticles to be formed can be controlled by changing the reaction temperature.

As mentioned above, according to the present invention, particles having a controlled particle size of nanometer order can be continuously prepared by using a simple apparatus.

Other modifications and variations to the invention will be apparent to those skilled in the art from the foregoing disclosure and teachings. Thus, while only certain embodiments of the invention have been specifically described herein, it will be apparent that numerous modifications may be made thereto without departing from the scope of the claims.

## Claims

1. A method of preparing a nanoparticle having a particle size of 1 nm to 1 µm, said method comprising:
continuously supplying a solution containing a particle-forming precursor into a micro channel (3) having a diameter of 1 µm to 1 mm, said micro channel being disposed in a heating zone (4);
heating said solution at a heating rate of 5°C/sec or more up to a redaction initiation temperature to cause a reaction in said solution; and
cooling said solution at a cooling rate of 5°C/sec or more to prepare the nanoparticle.

2. The method of claim 1, wherein the heating temperature and the residence time of said particle-forming precursor solution in said heating zone are adjusted to control a particle size of the nanoparticle.

3. The method of claim 1, wherein the reaction is performed while agitating said particle-forming precursor solution,

4. The method of claim 3, wherein said particle-farming precursor solution is agitated by means of ultrasound.

5. The method of claim 1, wherein said particle-forming precursor solution includes a first solution and a second solution adapted to form different phases, respectively, wherein said first and second solutions are reacted with one another among an interface therebetween.

6. The method of claim 1, wherein said particle-forming precursor solution is injected with a fluid for segmenting said solution to control the residence-time distribution of said solution.

7. The method of claim 1, wherein a concentration of the pincursor is -001 - 5 % by mass.

8. The method of claim 1, wherein a concentration of the precursor is .01 - 5 % by mass.

9. The method of claim 1, wherein a solvent in the solution, is selected from a group consisting of water, an organic solvent, methyl alcohol, ethyl alcohol acetone, dimethylformamide, dimethylacetamide, dimethyl sulfoxide, octane, cyclohexane, benzene, xylene, diethyl ether and acetic esther

10. The method of claim 1, wherein the nanoparticule is made of a Material selected from a group consisting of gold, silver, palladium, cobalt, nickel, a metalloid, silicon, germanium, a metalloid oxide, zinc oxide, silicon oxide, germanium oxide, a metal chalcogenide compound cadmium selenide, cadmium sulfide, zinc sulfide, an organic complex compound and an organic pigment

11. The method of claim 2, wherein the residence time in the micro channel is controlled by adjusting a feeding rate of the solution.

12. The method of claim 2, wherein the residence time in the micro channel is controlled by adjusting à volume of the micro channel.

13. The method of claim 6, wherein the fluid is selected from a group consisting of nitrogen, argon, helium, air, oxygen, hydrogen, ammonia, hexane, cyclohexane, toluene, water, methyl alcohol, ethyl alcohol, dimethyl sulfoxide and dimethylformamide.

14. The method of claim 1, wherein the micro channel is a capillary tube.

15. The method of claim 14, wherein the capillary tube is made using a material selected from a group consisting of glass, metal, alloy, a plastic, polyolefin, polyvinyl chloride, polyamide, polyester and fluororesin.

16. The method of claim 1, wherein the micro channel is provided by a groove on a layer, said layer being on a heat resistant substrate.

17. The method of claim 16, wherein the layer is made of a material selected from a group consisting of a metal oxide, silica, alumina, titania, a heat-resistant plastic, and fluorinated resin.

18. The method of claim 16, wherein the heat-resistant substrate is a metal or an alloy.

19. The method of claim 1 wherein the heating zone is made of a heat plate, an oil bath, an infrared heater or a high frequency heater,

20. The method as recited in claim 1, 2 or 6, wherein said particle-forming precursor solution includes a plurality of solutions, and wherein said plurality of solutions do not obviously react with one another to produce any particles at a room temperature but react at a high temperature, said method further comprising the step of:
mixing said plurality of solutions in advance, and
heating said mixed solutions in said heating zone to generate nanoparticles.

## Patentansprüche

1. Verfahren zur Herstellung eines Nanopartikels, der eine Partikelgröße von 1 nm bis 1 µm aufweist, wobei das Verfahren aufweist:
fortlaufendes Zuführen einer Lösung, die eine Partikel ausformende Vorstufe enthält, in einen Mikrokanal (3), der einen Durchmesser von 1 µm bis 1 mm aufweist, wobei der Mikrokanal in einem Erwärmungsbereich (4) angeordnet ist;
Erwärmen der Lösung mit einer Erwärmungsrate von 5°C /sec oder mehr bis zu einer eine Reaktion auslösenden Temperatur, um eine Reaktion in der Lösung zu bewirken; und
Abkühlen der Lösung mit einer Kühlrate von 5°C / sec oder mehr, um den Nanopartikel herzustellen.

2. Verfahren nach Anspruch 1, wobei die Erwärmungstemperatur und die Verweildauer der Partikel ausformenden Vorstufenlösung in dem Erwärmungsbereich eingestellt werden, um eine Partikelgröße des Nanopartikels zu steuern.

3. Verfahren nach Anspruch 1, wobei die Reaktion ausgeführt wird, während die Partikel ausformende Vorstufenlösung vermischt wird.

4. Verfahren nach Anspruch 3, wobei die Partikel ausformende Vorstufenlösung unter Anwendung von Ultraschall vermischt wird.

5. Verfahren nach Anspruch 1, wobei die Partikel ausformende Vorstufenlösung eine erste Lösung und eine zweite Lösung aufweist, die angepasst sind um entsprechende unterschiedliche Phasen auszuformen, wobei die ersten und zweiten Lösungen entlang einer Trennfläche zwischen diesen eine Reaktion miteinander eingehen.

6. Verfahren nach Anspruch 1, wobei in die Partikel ausformende Vorstufenlösung eine Flüssigkeit zum Aufteilen der Lösung injiziert wird, um die Verteilung der Lösung während der Verweildauer zu steuern.

7. Verfahren nach Anspruch 1, wobei eine Konzentration der Vorstufe 0,001 - 5 % der Masse ist.

8. Verfahren nach Anspruch 1, wobei eine Konzentration der Vorstufe 0,01 - 5 % der Masse ist.

9. Verfahren nach Anspruch 1, wobei ein Lösungsmittel in der Lösung aus einer Gruppe ausgewählt ist, die aus Wasser, einem organischen Lösungsmittel, Methylalkohol, Äthylalkohol, Azeton, Dimethylformamid, Dimethylacetainid, Dimethylsulfoxid, Oktan, Cyclohexan, Benzen, Xylen, Diethyläther und essigsaurem Äther besteht.

10. Verfahren nach Anspruch 1, wobei der Nanopartikel aus einem Material hergestellt wird, das aus einer Gruppe ausgewählt ist, die aus Gold, Silber, Palladium, Kobalt, Nickel, einem Halbmetall, Silizium, Germanium, einem Halbmetalloxid, Zinkoxid, Siliziumoxid, Germaniumoxid, einer Metallkalzogenidverbindung, Cadmiumselenid, Cadmiumsulfid, Zinksulfid, einer organischen komplexen Verbindung und einem organischen Pigment besteht.

11. Verfahren nach Anspruch 2, wobei die Verweildauer in dem Mikrokanal durch Einstellen einer Zuführrate der Lösung gesteuert wird.

12. Verfahren nach Anspruch 2, wobei die Verweildauer in dem Mikrokanal durch Einstellen eines Volumens des Mikrokanals gesteuert wird.

13. Verfahren nach Anspruch 6, wobei die Flüssigkeit aus einer Gruppe ausgewählt ist, die aus Stickstoff, Argon, Helium, Luft, Sauerstoff, Wasserstoff, Ammoniak, Hexan, Cyclohexan, Toluen, Wasser, Methylalkohol, Äthylalkohol, Dimethylsulfoxid und Dimethylformamid besteht.

14. Verfahren nach Anspruch 1, wobei der Mikrokanal ein Kapillarrohr ist.

15. Verfahren nach Anspruch 14, wobei das Kapillarrohr hergestellt ist unter Verwendung eines Materials das ausgewählt ist aus einer Gruppe bestehend aus Glas, Metall, einer Legierung, einem Kunststoff, Polyolefin, Polyvinylchlorid, Polyamid, Polyester und Fluorkunstharz.

16. Verfahren nach Anspruch 1, wobei der Mikrokanal durch eine Auskehlung auf einer Schicht zur Verfügung gestellt ist, wobei die Schicht auf einem hitzebeständigen Substrat angeordnet ist.

17. Verfahren nach Anspruch 16, wobei die Schicht aus einem Material hergestellt ist, das aus einer Gruppe ausgewählt ist, die aus einem Metalloxid, Kieselerde, Aluminiumoxid, Titanoxid, einem hitzebeständigen Kunststoff und fluorisiertem Kunstharz besteht.

18. Verfahren nach Anspruch 16, wobei das hitzebeständige Substrat Metall oder eine Legierung ist.

19. Verfahren nach Anspruch 1, wobei der Erwärmungsbereich aus einer Heizplatte, einem Ölbad, einer Infrarotheizung oder einer Hochfrequenzheizung ausgebildet ist.

20. Verfahren nach Anspruch 1, 2 oder 6, wobei die Partikel ausformende Vorstufenlösung eine Vielzahl von Lösungen aufweist, und wobei die Vielzahl von Lösungen bei Raumtemperatur offensichtlich keine Reaktion miteinander eingehen und keine Partikel erzeugen, aber bei einer hohen Temperatur eine Reaktion miteinander eingehen, wobei das Verfahren weiterhin den Schritt aufweist:
vorab Vermischen der Vielzahl von Lösungen, und
Erwärmen der vermischten Lösungen im Erwärmungsbereich, um Nanopartikel zu erzeugen.

## Revendications

1. Procédé pour la préparation d'une nanoparticule ayant un diamètre de particules de 1 nm à 1 µm, ledit procédé comprenant les étapes consistant :
à fournir de manière continue une solution contenant un précurseur de formation de particules dans un microcanal (3) ayant un diamètre de 1 µm à 1 mm, ledit microcanal étant placé dans une zone de chauffage (4) ;
à chauffer ladite solution à une vitesse d'élévation de température égale ou supérieure 5°C/seconde jusqu'à une température d'initiation de réaction pour provoquer une réaction dans ladite solution ; et
à refroidir ladite solution à une vitesse d'abaissement de température égale ou supérieure à 5°C/seconde pour préparer la nanoparticule.

2. Procédé suivant la revendication 1, dans lequel la température de chauffage et le temps de séjour de ladite solution de précurseur de formation de particules dans ladite zone de chauffage sont ajustés pour réguler le diamètre de particules de la nanoparticule.

3. Procédé suivant la revendication 1, dans lequel la réaction est conduite tout en agitant ladite solution de précurseur de formation de particules.

4. Procédé suivant la revendication 3, dans lequel ladite solution de précurseur de formation de particules est agitée par agitation ultrasonique.

5. Procédé suivant la revendication 1, dans lequel ladite solution de précurseur de formation de particules comprend une première solution et une seconde solution adaptées pour former des phases différentes, respectivement, lesdites première et seconde solutions étant amenées à réagir l'une avec l'autre le long d'une interface entre ces solutions.

6. Procédé suivant la revendication 1, dans lequel ladite solution de précurseur de formation de particules est injectée avec un fluide pour la segmentation de ladite solution afin de réguler la distribution de temps de séjour de ladite solution.

7. Procédé suivant la revendication 1, dans lequel la concentration du précurseur est de 0,001 à 5 % en masse.

8. Procédé suivant la revendication 1, dans lequel la concentration du précurseur est de 0,01 à 5 % en masse.

9. Procédé suivant la revendication 1, dans lequel un solvant dans la solution est choisi dans un groupe consistant en l'eau, un solvant organique, l'alcool méthylique, l'alcool éthylique, l'acétone, le diméthylformamide, le diméthylacétamide, le diméthylsulfoxyde, l'octane, le cyclohexane, le benzène, le xylène, l'éther diéthylique et l'éther acétique.

10. Procédé suivant la revendication 1, dans lequel la nanoparticule est constituée d'une matière choisie dans un groupe consistant en l'or, l'argent, le palladium, le cobalt, le nickel, un métalloïde, le silicium, le germanium, un oxyde de métalloïde, l'oxyde de zinc, l'oxyde de silicium, l'oxyde de germanium, un chalcogénure métallique, le séléniure de cadmium, le sulfure de cadmium, le sulfure de zinc, un composé complexe organique et un pigment organique.

11. Procédé suivant la revendication 2, dans lequel le temps de séjour dans le microcanal est régulé en ajustant la vitesse d'introduction de la solution.

12. Procédé suivant la revendication 2, dans lequel le temps de séjour dans le microcanal est régulé en ajustant le volume du microcanal.

13. Procédé suivant la revendication 6, dans lequel le fluide est choisi dans un groupe consistant en l'azote, l'argon, l'hélium, l'air, l'oxygène, l'hydrogène, l'ammoniac, l'hexane, le cyclohexane, le toluène, l'eau, l'alcool méthylique, l'alcool éthylique, le diméthylsulfoxyde et le diméthylformamide.

14. Procédé suivant la revendication 1, dans lequel le microcanal est un tube capillaire.

15. Procédé suivant la revendication 14, dans lequel le tube capillaire est produit en utilisant une matière choisie dans un groupe consistant en le verre, un métal, un alliage, une matière plastique, une polyoléfine, le poly(chlorure de vinyle), un polyamide, un polyester et une résine fluorée.

16. Procédé suivant la revendication 1, dans lequel le microcanal est muni d'une rainure sur une couche, ladite couche étant sur un substrat thermorésistant.

17. Procédé suivant la revendication 16, dans lequel la couche est constituée d'une matière choisie dans un groupe consistant en un oxyde métallique, la silice, l'alumine, l'oxyde de titane, une matière plastique thermorésistante et une résine fluorée.

18. Procédé suivant la revendication 16, dans lequel le substrat thermorésistant est constitué d'un métal ou d'un alliage.

19. Procédé suivant la revendication 1, dans lequel la zone de chauffage est constituée d'une plaque chauffante, d'un bain d'huile, d'un élément chauffant à infrarouge ou d'un élément chauffant haute fréquence.

20. Procédé suivant la revendication 1, 2 ou 6, dans lequel ladite solution de précurseur de formation de particules comprend une pluralité de solutions, et dans lequel lesdites solutions de la pluralité de solutions ne réagissent manifestement pas les unes avec les autres pour produire des particules à température ambiante mais réagissent à une température élevée, ledit procédé comprenant en outre les étapes consistant :
à mélanger à l'avance ladite pluralité de solutions et à chauffer ledit mélange de solutions dans ladite zone de chauffage pour engendrer des nanoparticules.
